# EUROPEAN PATENT SPECIFICATION

(11) **EP 4 347 349 B1**
(45) Date of publication and mention of the grant of the patent: **29.10.2025**
(21) Application number: 22728962.6
(22) Date of filing: 27.05.2022
(51) Int. Cl.: B61L 5/18

(54) **RAIL SIGNAL**
SCHIENENSIGNAL
SIGNAL DE RAIL

(30) Priority: 28.05.2021 GB 202107731
(43) Date of publication of application: 10.04.2024
(73) Proprietor: UNIPART RAIL LIMITED, Cowley, Oxford, Oxfordshire OX24 2PG (GB)
(72) Inventor: AYDIN, Ilkan, Southport Merseyside PR9 7TN (GB); CONYNGHAM, Kurt, Southport Merseyside PR9 7TN (GB)
(74) Representative: HGF
(86) International application number: PCT/GB2022/051360
(87) International publication number: WO 2022/248880

(56) References cited:
- JP-A- 2003 030 786
- US-A- 4 785 385

## Description

### TECHNICAL FIELD

The present invention relates to rail signals.

### BACKGROUND

Illuminated rail signals are used to communicate with the drivers of trains and trams travelling along a track (the permanent way). Such rail signals are placed close to the track to which they relate, and as the driver approaches the signal, the viewing angle and visible light intensity change.

US4785385A discloses a traffic light lens, suitable for use with traffic lights, which has a body portion that is a segment of a sphere and a mounting or sealing ring at the periphery of the body portion. An array of lenticular elements is formed on the concave inner surface of the body portion and is arranged in rows extending substantially horizontally across the concave inner surface of the body portion of the lens. Between each adjacent lenticular element there is a recess to modify the reflection pattern of the lens.

### SUMMARY OF THE DISCLOSURE

According to the present disclosure, there is provided a rail signal and a rail signalling system as set forth in the appended claims.

According to a first aspect, there is provided a rail signal having a rail signal lamp with a lens assembly comprising:
a light emitter panel having a plurality of light emitters; and
a lens plate covering the plurality of light emitters and provided with lens elements aligned with the light-emitters,
wherein the lens elements have a rear surface facing a respective light emitter and an opposed front surface, and the front surface is continuously rotationally symmetric about a Z axis that is parallel with an optical axis of the lens element, has orthogonal X and Y axes;
wherein the rear surfaces each have a plurality of concavities in the X-Z plane, having a mirror symmetric arrangement of a first concavity between two second concavities, wherein the centre of the first concavity is aligned with the optical axis, and the second concavities have a larger radius of curvature than the radius of curvature of the respective first concavity.

According to a second aspect, there is provided a rail signalling system comprising a plurality of rail signals according to the first aspect and a control system for controlling the rail signals.

The second concavities may have a radius of curvature that is at least double the radius of curvature of the respective first concavity.

The second concavities may have a radius of curvature that is at least three times the radius of curvature of the respective first concavity.

The concavities of the rear surfaces may have a constant cross-sectional shape along the Y direction.

The rearmost extent of the first concavities may be forward of the rearmost extent of the second concavities.

The lens elements may be spaced apart on the lens plate.

The rail signal may comprise a lens plate mask extending across the lens plate and provided with a lens element aperture aligned with each lens element of the lens plate.

The lens plate may be provided with lens elements corresponding with each of the light emitters.

The light emitters may be light emitting diodes.

The light emitters may be red, green and yellow light emitters.

### DESCRIPTION OF THE DRAWINGS

Examples are further described hereinafter with reference to the accompanying drawings, in which:
- Figure 1 shows a three-dimensional view of a rail signal having two rail signal lamps;
- Figures 2A shows a three-dimensional view of a rail signal lamp of Figure 1;
- Figures 2B and 2C show orthogonal, cut-away views through a rail signal lamp of Figure 2A;
- Figure 3 shows an exploded view of a lens assembly of the rail signal lamp of Figure 2A, including a lens plate with lens elements;
- Figures 4A to 4E show a three-dimensional view, projection views, and enlarged cut-away views of the lens plate of Figure 3;
- Figure 4F shows a three-dimensional view of a lens element of the lens plate of Figure 3;
- Figure 5 shows a side view of a three-dimensional ray tracing diagram of the lens element of Figure 4F; and
- Figures 6A and 6B show distant intensity plots of the light transmitted through the lens element of Figure 4F.

### DETAILED DESCRIPTION

Like reference numerals refer to like elements throughout.

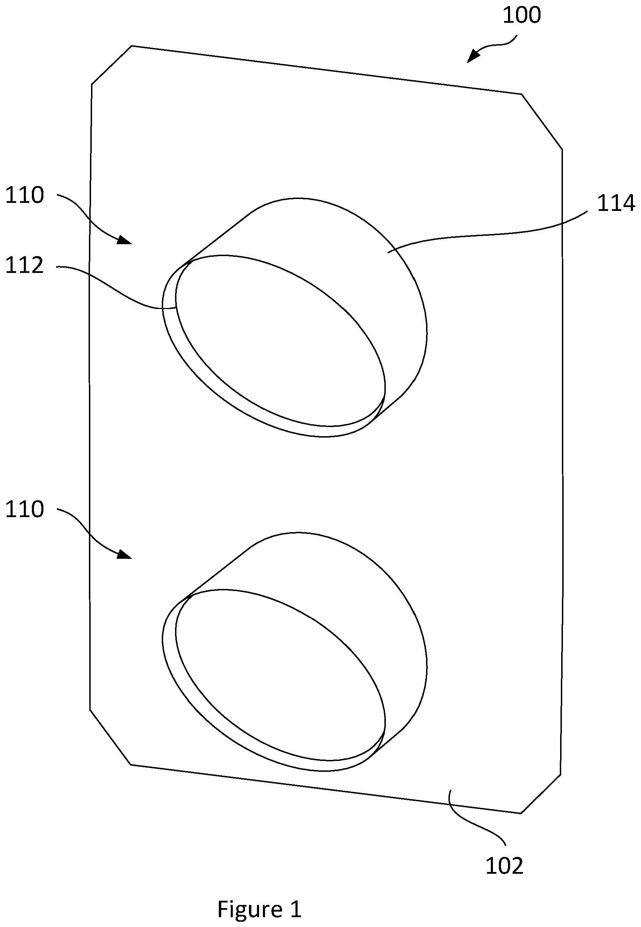

Figure 1 shows a three-dimensional view of a rail signal 100 having two rail signal lamps 110 mounted on a back board 102.

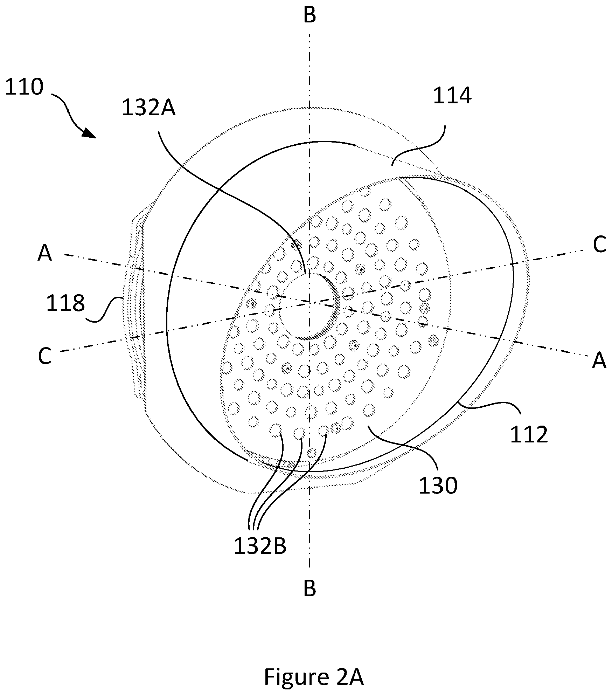

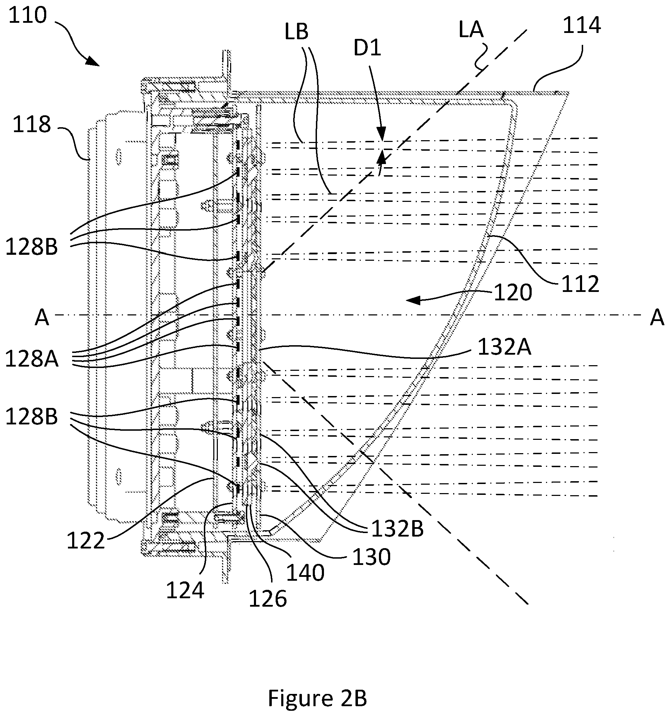

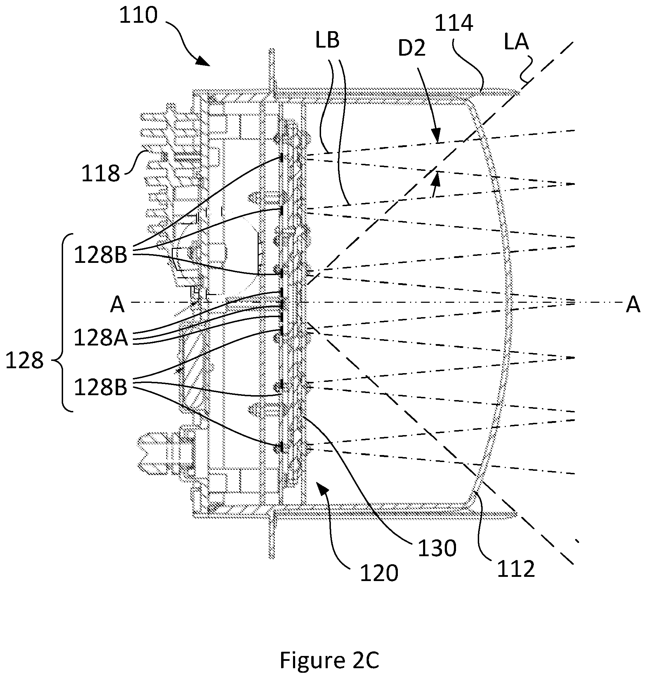

Figures 2A to 2C show further views of one of the rail signal lamps 110, which have a lens assembly 120 with an inner lens assembly portion 120A and an outer lens assembly portion 120B, a cover 112, a visor 114 and a signal lamp back 118. Figures 2B and 2C respectively show views cut-away along planes through the lines B-B and C-C in Figure 2A. The visor 114 shields the lens assembly 120 from sunlight. The cover 112 shields the lens assembly 120 from rain exposure. The signal lamp back 118 may have control electronics and a heat sink.

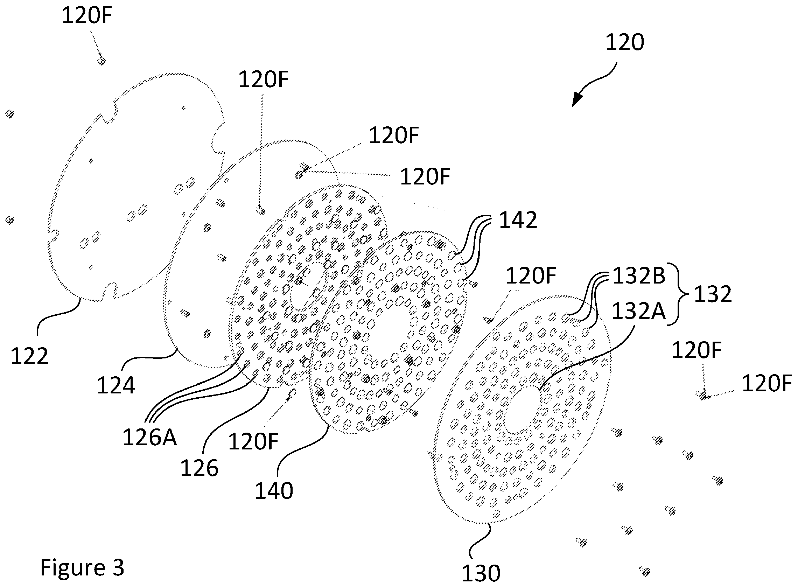

Figure 3 shows an exploded view of the lens assembly 120, having a backing panel 122, a circuit board (light emitter panel) 124, a light emitter mask 126, a lens plate 140 having lens elements 142, a lens plate mask 130, and fixing elements 120F (e.g. screws, nuts and screw receiving features) for assembly of the lens assembly.

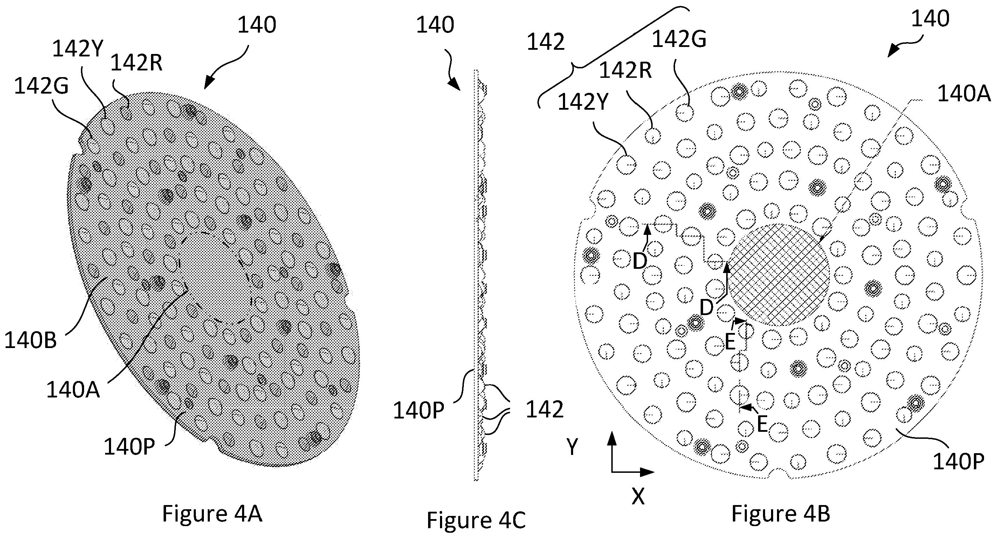

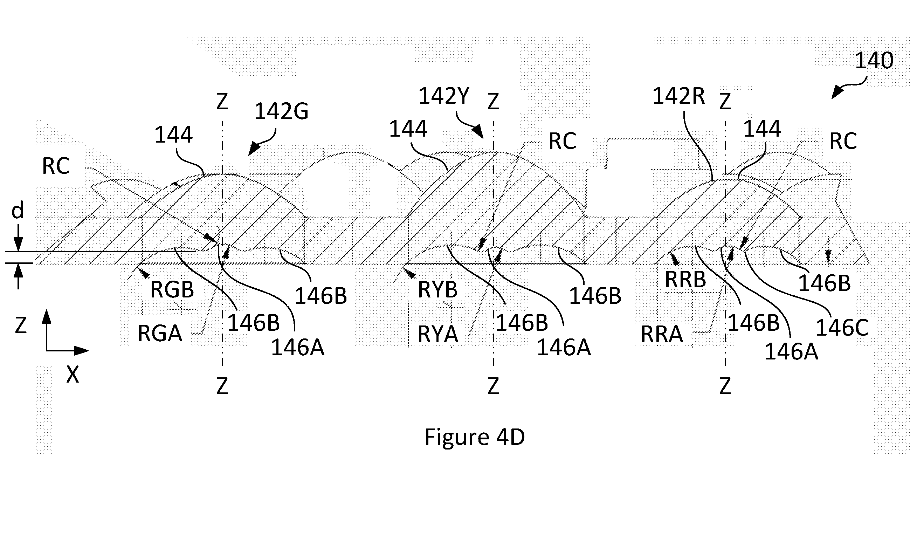

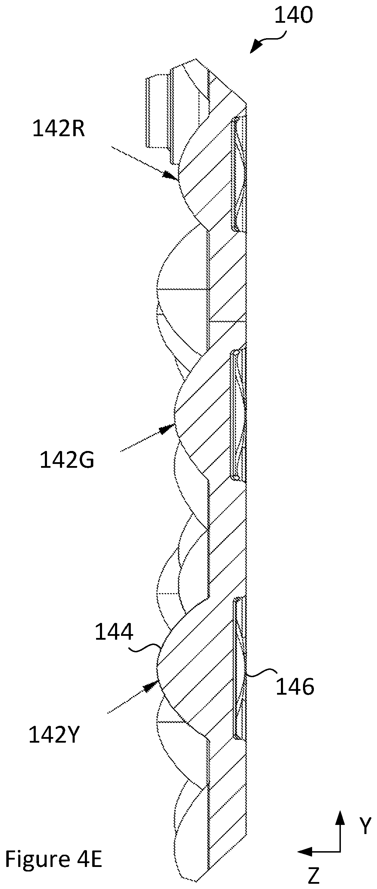

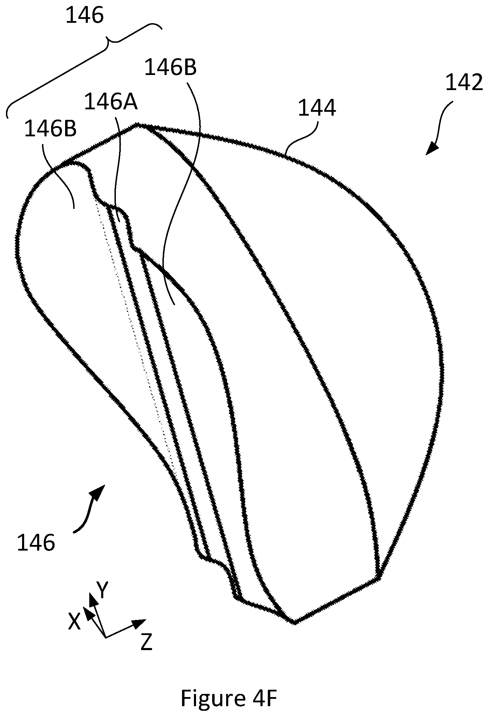

Figures 4A to 4C respectively show a three-dimensional view, a front view, and a side view of the lens plate 140. Figures 4D and 4E respectively each show an enlarged cut-away view of the lens plate along the lines D-D and E-E shown in Figure 4B, respectively showing sections of the lens elements 142 along the X- and Y-axes. Figure 4F shows a three-dimensional view of the front surface 144 and rear surface 146 (146A, 146B) of a lens element 142.

The circuit board 124 is provided with light emitters 128 for emitting light through the lens plate 140. Indicative light emitters 128 are shown in Figures 2B and 2C. Inner light emitters 128A are arranged in an inner region (e.g. central region) of the circuit board 124, and outer light emitters 128B are arranged in an outer region (e.g. a concentrically arranged ring region around the central region) of the circuit board 124 extending around the inner region. For example, there may be 120 outer light emitters 128B, e.g. 40 light emitters of each of three different colours.

The lens plate 140 has a planar section 140P and lens elements 142. In the illustrated lens plate 140, the lens elements 142 are provided in an outer region 140B corresponding with the outer region of the circuit board 124 on which the outer light emitters 128B are provided, and no lens elements are provided in an inner region 140A corresponding with the inner region of the circuit board on which the inner light emitters 128A are provided. LA indicates the light from the inner light emitters 128A, and LB indicates the light from the outer light emitters 128 after passing through the lens elements 142.

Alternatively, the lens plate may be provided with lens elements aligned with each of the light emitters of the circuit board (i.e. without a central planar region or central aperture).

The light LB emitted from the lens assembly 120 through each of the lens elements 142 on the lens plate 140 has a greater divergence D2 in the X-Z plane (e.g. plane parallel with axis C, shown in Figure 2C), than the divergence D1 in the Y-Z plane (e.g. plane parallel with axis B, shown in Figure 2B). The divergence D1, D2 is the angular range over which a beam has at least 50% of the intensity of the peak intensity of the beam.

By the light having a greater divergence in one plane (e.g. in the horizontal plane), the signal is visible to a train driver at a greater angle from the central axis A, enabling the signal to be visible over a longer approach distance when installed next to (or above) a section of curved rail track, enabling the use of fewer rail signals along a section of curved track.

The lens plate may be formed from a transparent acrylic plastic or glass (which may optionally be provided with an inner diffusion region in the inner region 140A).

As shown in Figure 4D and 4E, the illustrated lens elements 142R, 142Y, 142G on the lens plate 140 corresponding to light emitters 128B emitting differently coloured light (e.g. red, yellow and green, respectively) have front lens surfaces 144 with different optical powers, providing light from the outer light emitters 128B with similar divergences, in each plane. The shape of each front lens surface 144 may be continuously rotationally symmetric (i.e. having circular symmetry). The lens plate 140 may be manufactured by injection moulding, with front and rear moulds that are complementarily shaped for the front and rear faces of the lens plate. The use of a continuously rotational symmetric front lens surface 144 enables the same front mould to be used in the formation of an alternative lens plate 140 with continuously rotationally symmetric optical properties (i.e. with a narrow beam divergence in both perpendicular planes), by use with an alternative rear mould producing a lens plate (and lens elements) with a flat rear surface.

The lens plate 140 may have 120 lens elements, having 40 lens elements for each of three different colours of light emitters 128B.

The rear surface 146 (facing the light emitter) of each lens element 142 has three concavities 146A, 146B (e.g. channels having approximately cylindrical shapes) extending parallel to each other and parallel to the Y axis. The concavities are a first concavity 146A between two second concavities 146B, in a mirror symmetric arrangement with respect to the optical axis Z of the front surface 144. The second concavity 146B is wider and has a larger radius of curvature Y (RGB, RYB, RRB) than the radius of curvature (RGA, RYA, RRA) of the first concavity 146A. Each of the second concavities 146B may have a radius of curvature (RGB, RYB, RRB) that is at least double the radius of curvature (RGA, RYA, RRA) of the respective first concavity 146A, and may have at least three times the radius of curvature. Each second concavity 146B may be at least twice as wide as the respective first concavity 146A.

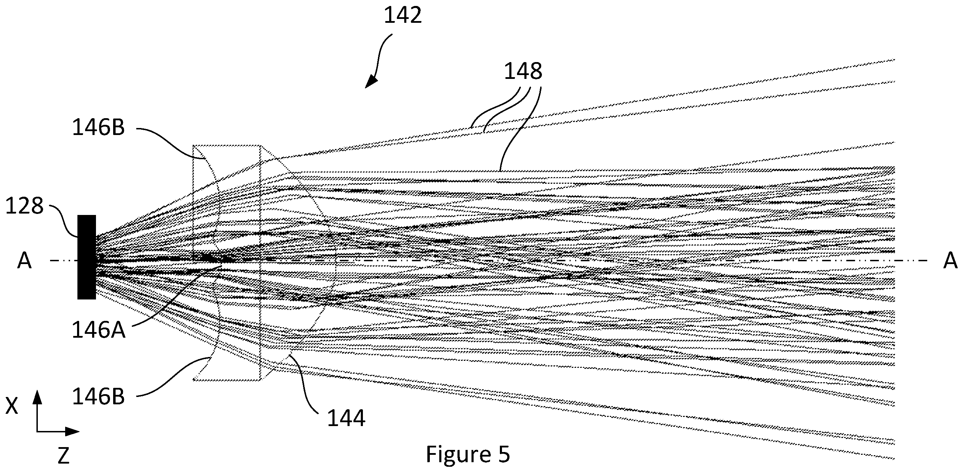

Figure 5 shows a side view in the X-Z plane of a three-dimensional ray tracing diagram of a lens element 142, showing the paths through the lens element of a selection of rays emitted from across the surface of a light emitter 128. The light emitter 128 emits light with substantially the same intensity distribution parallel and perpendicular to the lengths of the concavities.

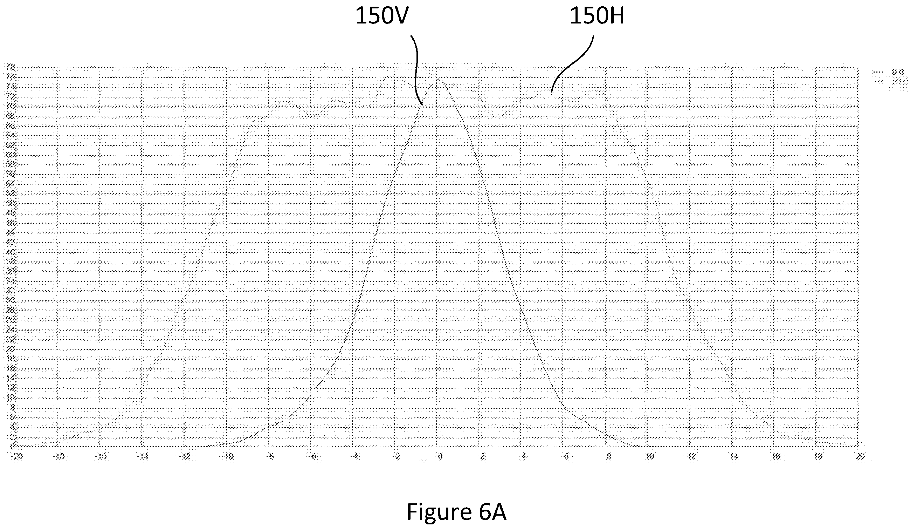

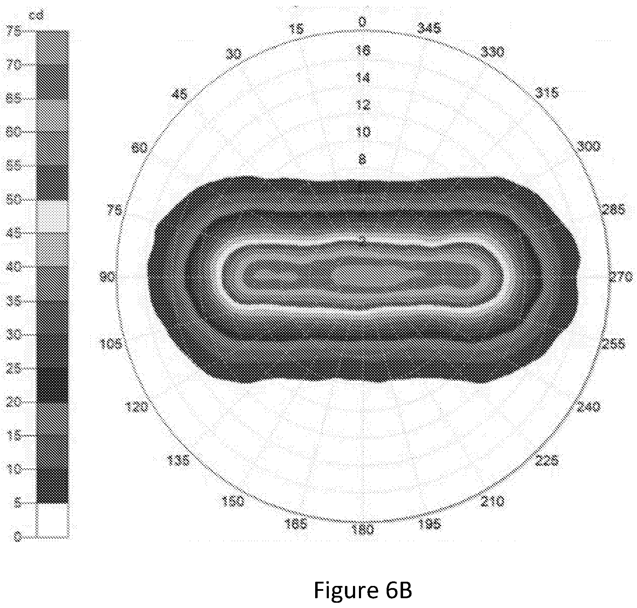

Figure 6A shows plots of the intensity of the light transmitted through a lens element 142. The intensity distribution in the Y axis direction (parallel to the length of the concavities 146A, 146B) has an inverted V-shape plot 150V (e.g. the vertical intensity distribution of the rail signal 100 in use), having a light intensity that drops to 50% at about 3° either side of the Z-axis direction (parallel with optical axis A). The intensity distribution in the X axis direction (perpendicular to the length of the concavities 146A, 146B), is shown in plot 150H (e.g. the horizonal intensity distribution of the rail signal 100 in use), having a relatively uniform intensity across an angular range either side of the central axis, with a light intensity that drops to 50% at more than 10° either side of the optical axis. This is shown further in the plot of Figure 6B, showing a polar iso-candela plot of the intensity of light from light emitter 128 transmitted through the lens element 142, measured at distance. The wide, relatively uniform distribution of light intensity in the X direction enables the signal to be visible to a driver approaching along a curved track and when close to a rail signal mounted to one side of the track.

The three concavities 146A, 146B across the width of the rear of the lens element 142, with a more tightly curved central first concavity 146A provides a first concavity that is recessed by a distance d (spaced towards the forward surface 144) from the rearmost extent of the less curved second concavities 146B, that it is located between (i.e. the rearmost extent of the first concavities is forward of the rearmost extent of the second concavities). This enables the rear of the planar region 140P of the lens plate 140 to be mounted closer to the light emitter 128 with reduced sensitivity to variations in the alignment, e.g. variations in separation due to assembly tolerances.

The more tightly curved central, first concavity 146A, separated from the side, second concavities 146B by convexly shaped cusps 146C, provides a generally uniform intensity distribution (i.e. without a central region of reduced intensity) in plot 150H, and enables the formation of the lens element 142 with a thickness parallel to the optical axis of the front surface 144 that is generally similar in thickness to the planar region 140P of the lens plate 140, making the lens elements stronger than with a single concavity extending across the width of the lens element, and enabling the formation of the lens plate 140 by injection moulding (e.g. by reducing the risk of thermal deformation of an injection moulded lens element when cooling, creating irregularities in optical performance).

The present lens plate 140 has lens elements 142 producing a wider beam divergence in one plane (X-Z plane) than in the perpendicular plane (Y-Z plane).

The (optional) light emitter mask 126 is provided between the circuit board 124 and the lens plate 140. The light emitter mask 126 is provided with an aperture 126A for each of the light emitters 128 on the circuit board 124. The light emitter mask 126 reduces reflective scattering of light between the light emitters 128 and the lens plate. The light emitter mask 126 reduces the reflection of stray light laterally between the circuit board 124 and the lens plate 140 from sunlight or train lights falling on the rail signal 100.

The lens plate mask 130 generally covers the outer region 140B of the lens plate 140, having mask apertures 132 for transmission of light from the light emitters 128. The lens plate mask 130 has outer lens element mask apertures 132B, each corresponding with an underlying outer light emitter 128B, and a larger inner mask aperture 132A for the plurality of inner light emitters 128A. The larger inner mask aperture 132A enables the transmission of the more divergent light from the inner light emitters 128A (or may be provided with a diffuser region).

Alternatively, the lens plate mask 130 may be provided with inner lens element mask apertures corresponding with the inner light emitters 128B, and the inner lens element mask apertures may be wider (larger diameter) than the outer lens element mask apertures.

The cover 112 is orientated with its perpendicular angled away from central axis A of the rail signal lamp 110, which reduces the risk of sunlight or train lights reflecting to the driver from the cover.

The cover 112 may be a ultraviolet absorbing cover, e.g. absorbing at least 75% (e.g. at least 90%) of perpendicular, non-reflected light in the range 100nm to 400nm. The ultraviolet absorbing cover reduces the ambient ultraviolet light falling on the light emitters 128, which may stimulate undesirable visible emission from the light emitters (e.g. by exciting phosphorcontaining compounds in a light emitting diode), reducing signal performance.

The cover may be formed from a polycarbonate plastic and may be provided with coatings, e.g. an ultraviolet absorption coating, an anti-reflection coating, and an antifog coating.

The light emitters 128 may be light emitting diodes (LEDs), for example LEDs of different colours (e.g. red, yellow and green LEDs).

A plurality of rail signals 100 may be used in a rail signalling system (not shown), being controlled by a control system (e.g. the system controlling the movement of trains across a rail network).

The figures provided herein are schematic and not to scale.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. The invention extends to any novel one, or any novel combination, of the features disclosed in this specification (including any accompanying claims, abstract and drawings), or to any novel one, or any novel combination, of the steps of any method or process so disclosed, within the scope of the appended claims.

## Claims

1. A rail signal (100) having a rail signal lamp (110) with a lens assembly (120) comprising:
a light emitter panel (124) having a plurality of light emitters (128); and
a lens plate (140) covering the plurality of light emitters (128) and provided with lens elements (142) aligned with the light-emitters (128),
wherein the lens elements (142, 142G, 142Y, 142R) have a rear surface (146) facing a respective light emitter (128) and an opposed front surface (144), and the front surface (144) is continuously rotationally symmetric about a Z axis that is parallel with an optical axis of the lens element, and has orthogonal X and Y axes;
wherein the rear surfaces (146) each have a plurality of concavities in the X-Z plane, having a mirror symmetric arrangement of a first concavity (146A) between two second concavities (146B), wherein the centre of the first concavity (146A) is aligned with the optical axis, and the second concavities (146B) have a larger radius of curvature (RGB, RYB, RBB) than the radius of curvature (RGA, RYA, RRA) of the respective first concavity (146A).

2. The rail signal of claim 1, wherein the second concavities (146B) have a radius of curvature (RGB, RYB, RBB) that is at least double radius of curvature (RGA, RYA, RRA) of the respective first concavity (146A).

3. The rail signal of claim 2, wherein the second concavities (146B) have a radius of curvature that is at least three times the radius of curvature (RGA, RYA, RRA) of the respective first concavity (146A).

4. The rail signal of any one of claims 1, 2 and 3, wherein the concavities (146A, 146B) of the rear surfaces (146) have a constant cross-sectional shape along the Y direction.

5. The rail signal according to any preceding claim, wherein the rearmost extent (146C) of the first concavities (146A) are forward of the rearmost extent of the second concavities (146B).

6. The rail signal according to any preceding claim, wherein the lens elements (142) are spaced apart on the lens plate (140).

7. The rail signal according to any preceding claim, comprising a lens plate mask (130) extending across the lens plate (140) and provided with a lens element aperture (132) aligned with each lens element (142) of the lens plate (140).

8. The rail signal according to any preceding claim, wherein the lens plate is provided with lens elements (142) corresponding with each of the light emitters (128).

9. The rail signal according to any preceding claim, wherein the light emitters (128) are light emitting diodes.

10. The rail signal according to any preceding claim, wherein the light emitters (128) are red, green and yellow light emitters.

11. A rail signalling system comprising a plurality of rail signals (100) according to any preceding claim and a control system for controlling the rail signals (100).

## Patentansprüche

1. Schienensignal (100) mit einer Schienensignallampe (110) mit einer Linsenbaugruppe (120), umfassend:
ein Lichtemitterfeld (124), das eine Vielzahl von Lichtemittern (128) aufweist; und
eine Linsenplatte (140), welche die Vielzahl von Lichtemittern (128) abdeckt und mit Linsenelementen (142) bereitgestellt ist, die mit den Lichtemittern (128) ausgerichtet sind,
wobei die Linsenelemente (142, 142G, 142Y, 142R) eine Rückfläche (146), die einem jeweiligen Lichtemitter (128) zugewandt ist, und eine gegenüberliegende Vorderfläche (144) aufweisen und die Vorderfläche (144) kontinuierlich rotationssymmetrisch um eine Z-Achse ist, die parallel zu einer optischen Achse des Linsenelements ist und orthogonale X- und Y-Achsen aufweist;
wobei die Rückflächen (146) jeweils eine Vielzahl von Konkavitäten in der X-Z-Ebene aufweisen, die eine spiegelsymmetrische Anordnung einer ersten Konkavität (146A) zwischen zwei zweiten Konkavitäten (146B) aufweisen, wobei das Zentrum der ersten Konkavität (146A) mit der optischen Achse ausgerichtet ist und die zweiten Konkavitäten (146B) einen größeren Krümmungsradius (RGB, RYB, RBB) als der Krümmungsradius (RGA, RYA, RRA) der jeweiligen ersten Konkavität (146A) aufweisen.

2. Schienensignal nach Anspruch 1, wobei die zweiten Konkavitäten (146B) einen Krümmungsradius (RGB, RYB, RBB) aufweisen, der zumindest der doppelte Krümmungsradius (RGA, RYA, RRA) der jeweiligen ersten Konkavität (146A) ist.

3. Schienensignal nach Anspruch 2, wobei die zweiten Konkavitäten (146B) einen Krümmungsradius aufweisen, der zumindest das Dreifache des Krümmungsradius (RGA, RYA, RRA) der jeweiligen ersten Konkavität (146A) ist.

4. Schienensignal nach einem der Ansprüche 1, 2 und 3, wobei die Konkavitäten (146A, 146B) der Rückflächen (146) eine konstante Querschnittsform entlang der Y-Richtung aufweisen.

5. Schienensignal nach einem vorhergehenden Anspruch, wobei die hinterste Ausdehnung (146C) der ersten Konkavitäten (146A) vor der hintersten Ausdehnung der zweiten Konkavitäten (146B) ist.

6. Schienensignal nach einem vorhergehenden Anspruch, wobei die Linsenelemente (142) auf der Linsenplatte (140) beabstandet sind.

7. Schienensignal nach einem vorhergehenden Anspruch, umfassend eine Linsenplattenmaske (130), die sich über die Linsenplatte (140) erstreckt und mit einer Linsenelementöffnung (132) bereitgestellt ist, die mit jedem Linsenelement (142) der Linsenplatte (140) ausgerichtet ist.

8. Schienensignal nach einem vorhergehenden Anspruch, wobei die Linsenplatte mit Linsenelementen (142) bereitgestellt ist, die jedem der Lichtemitter (128) entsprechen.

9. Schienensignal nach einem vorhergehenden Anspruch, wobei die Lichtemitter (128) lichtemittierende Dioden sind.

10. Schienensignal nach einem vorhergehenden Anspruch, wobei die Lichtemitter (128) rote, grüne und gelbe Lichtemitter sind.

11. Schienensignalisierungssystem, umfassend eine Vielzahl von Schienensignalen (100) nach einem vorhergehenden Anspruch und ein Steuersystem zum Steuern der Schienensignale (100).

## Revendications

1. Signal de rail (100) possédant une lampe (110) de signal de rail avec un ensemble lentille (120) comprenant :
un panneau émetteur de lumière (124) possédant une pluralité d'émetteurs de lumière (128) ; et
une plaque de lentille (140) recouvrant la pluralité d'émetteurs de lumière (128) et munie d'éléments de lentilles (142) alignés avec les émetteurs de lumière (128),
lesdits éléments de lentille (142, 142G, 142Y, 142R) possédant une surface arrière (146) faisant face à un émetteur de lumière respectif (128) et une surface avant opposée (144), et ladite surface avant (144) étant symétrique en rotation de manière continue autour d'un axe Z qui est parallèle à un axe optique de l'élément de lentille, et possédant des axes X et Y orthogonaux ;
lesdites surfaces arrière (146) possédant chacune une pluralité de concavités dans le plan X-Z, possédant un agencement à symétrie miroir d'une première concavité (146A) entre deux secondes concavités (146B), ledit centre de la première concavité (146A) étant aligné avec l'axe optique, et lesdites secondes concavités (146B) possédant un rayon de courbure (RGB, RYB, RBB) plus grand que le rayon de courbure (RGA, RYA, RRA) de la première concavité respective (146A).

2. Signal de rail de la revendication 1, lesdites secondes concavités (146B) possédant un rayon de courbure (RGB, RYB, RBB) qui est au moins un double rayon de courbure (RGA, RYA, RRA) de la première concavité respective (146A).

3. Signal de rail de la revendication 2, lesdites secondes concavités (146B) possédant un rayon de courbure qui est au moins trois fois le rayon de courbure (RGA, RYA, RRA) de la première concavité respective (146A).

4. Signal de rail de l'une quelconque des revendications 1, 2 et 3, lesdites concavités (146A, 146B) des surfaces arrière (146) possédant une forme de section transversale constante le long de la direction Y.

5. Signal de rail selon une quelconque revendication précédente, ladite extension la plus arrière (146C) des premières concavités (146A) étant en avant de l'extension la plus arrière des secondes concavités (146B).

6. Signal de rail selon une quelconque revendication précédente, lesdits éléments de lentille (142) étant espacés les uns des autres sur la plaque de lentille (140).

7. Signal de rail selon une quelconque revendication précédente, comprenant un masque (130) de plaque de lentille s'étendant à travers la plaque de lentille (140) et muni d'une ouverture (132) d'élément de lentille alignée avec chaque élément de lentille (142) de la plaque de lentille (140).

8. Signal de rail selon une quelconque revendication précédente, ladite plaque de lentille étant munie d'éléments de lentille (142) correspondant à chacun des émetteurs de lumière (128).

9. Signal de rail selon une quelconque revendication précédente, lesdits émetteurs de lumière (128) étant des diodes électroluminescentes.

10. Signal de rail selon une quelconque revendication précédente, lesdits émetteurs de lumière (128) étant des émetteurs de lumière rouge, verte et jaune.

11. Système de signalisation de rail comprenant une pluralité de signaux de rail (100) selon une quelconque revendication précédente et un système de commande pour commander les signaux de rail (100).
